# EUROPÄISCHE PATENTSCHRIFT

(11) **EP 2 608 973 B1**
(45) Veröffentlichungstag und Bekanntmachung des Hinweises auf die Patenterteilung: **21.10.2015**
(21) Anmeldenummer: 11769767.2
(22) Anmeldetag: 16.08.2011
(51) Int. Cl.: B60H 1/14, B60H 1/32, B60H 1/00

(54) **HEIZ-/KÜHLEINRICHTUNG UND HEIZ-/KÜHL-MODUL FÜR EINE HEIZ-/KÜHLEINRICHTUNG**
HEATING/COOLING DEVICE AND HEATING/COOLING MODULE FOR A HEATING/COOLING DEVICE
DISPOSITIF DE CHAUFFAGE ET DE REFROIDISSEMENT ET MODULE DE CHAUFFAGE / DE REFROIDISSEMENT POUR UN DISPOSITIF DE CHAUFFAGE / DE REFROIDISSEMENT

(30) Priorität: 24.08.2010 DE 102010035272
(43) Veröffentlichungstag der Anmeldung: 03.07.2013
(73) Patentinhaber: Magna Powertrain Bad Homburg GmbH, 61352 Bad Homburg v. d. Höhe (DE)
(72) Erfinder: SCHÄFER, Tilo, 55566 Danbach (DE); SCHÜSSLER, Stefan, 60431 Frankfurt (DE); PARSCH, Willi, 64342 Seeheim (DE)
(74) Vertreter: Rausch, Gabriele
(86) Internationale Anmeldenummer: PCT/DE2011/001618
(87) Internationale Veröffentlichungsnummer: WO 2012/025099

(56) Entgegenhaltungen:
- EP-A2- 0 660 055
- DE-A1-102004 008 210
- DE-T2- 69 320 142

## Beschreibung

Die Erfindung betrifft eine Heiz-/Kühleinrichtung gemäß Oberbegriff des Anspruchs 1 sowie ein Heiz-/Kühl-Modul gemäß Oberbegriff des Anspruchs 13.

Derartige Heiz-/Kühleinrichtungen sind bekannt. Sie weisen einen Verdichter auf, der ein Kältemittel in einem Kältemittel-Kreislauf verdichtet, außerdem einen Gaskühler, der dazu dient, das verdichtete und damit erwärmte Kältemittel abzukühlen. Sie weisen außerdem einen Verdampfer und ein zwischen dem Gaskühler und dem Verdampfer in den Kältemittel-Kreislauf integriertes Expansionsventil auf. Das expandierte Kältemittel verdampft im Verdampfer, wo Kälte zur Verfügung steht.

Bei herkömmlichen Heiz-/Kühleinrichtungen wird der Gaskühler durch einen Luftstrom abgekühlt. Der Verdampfer wird ebenfalls mit einem Luftstrom beaufschlagt, um die im Verdampfer bereitgestellte Kälte zu nutzen beziehungsweise das im Verdampfer vorhandene Kältemittel zu erwärmen.

Es hat sich herausgestellt, dass der Wärmeaustausch sowohl im Gaskühler als auch im Verdampfer unzureichend ist, sodass relativ große Flächen zur Verfügung gestellt werden müssen, die von Luft durchströmt werden.

Aufgabe der Erfindung ist es daher, eine Einrichtung der hier angesprochenen Art zu schaffen, die einen sehr kompakten Aufbau erlaubt.

Zur Lösung dieser Aufgabe wird eine Heiz-/Kühleinrichtung der oben genannten Art vorgeschlagen, welche die in Anspruch 1 genannten Merkmale umfasst. Die Heiz-/Kühleinrichtung der hier angesprochenen Art zeichnet sich dadurch aus, dass der Gaskühler oder der Verdampfer mit einem Flüssigkeits-Kühlmittel-Kreislauf gekoppelt ist, der mit einem Innenraum-Wärmetauscher oder einem Außenluft-Wärmetauscher zusammenwirkt. Durch den mit dem Gaskühler oder Verdampfer gekoppelten Flüssigkeits-Kühlmittel-Kreislauf lässt sich ein sehr effektiver Wärmeaustausch realisieren, sodass die zur Verfügung stehenden Wärmeübertragungsflächen gegenüber bekannten sehr viel kompakter ausgebildet werden können.

Die Heiz-/Kühleinrichtung zeichnet sich wahlweise auch dadurch aus, dass sowohl der Gaskühler als auch der Verdampfer mit einem eigenen, separaten Flüssigkeits-Kühlmittel-Kreislauf gekoppelt sind, wobei einer der Flüssigkeits-Kühlmittel-Kreisläufe mit dem Innen-raum-Wärmetauscher und der andere Flüssigkeits-Kühlmittel-Kreislauf mit dem Außenluft-Wärmetauscher zusammenwirkt. Auch bei dieser Ausführungsform der Heiz-/Kühleinrichtung ist sichergestellt, dass die thermische Energie im Gaskühler beziehungsweise im Verdampfer sehr effektiv auf das Flüssigkeits-Kühlmittel übertragen wird.

Bevorzugt wird ein Ausführungsbeispiel der Heiz-/Kühleinrichtung, bei der der Kältemittel-Kreislauf einen internen Wärmetauscher umfasst, der Wärme aus dem vom Gaskühler zum Expansionsventil strömenden Kältemittel auf das vom Verdampfer zum Verdichter strömende Kältemittel überträgt. Dadurch lässt sich der Wirkungsgrad des Kältemittel-Kreislaufs erhöhen.

Bei einem weiteren bevorzugten Ausführungsbeispiel der Heiz-/Kühleinrichtung ist ein Speicher in den Kältemittel-Kreislauf integriert, der Unterschiede im Kältemittelbedarf insbesondere abhängig vom Betriebspunkt ausgleichen kann.

Ein besonders bevorzugtes Ausführungsbeispiel zeichnet sich dadurch aus, dass, wenn der Gaskühler und der Verdampfer je einen eigenen Flüssigkeits-Kühlmittel-Kreislauf umfassen, in einem Heizbetrieb der Kühlmittel-Kreislauf des Gaskühlers mit dem Innenraum-Wärmetauscher und der Flüssigkeits-Kühlmittel-Kreislauf des Verdampfers mit dem Außenluft-Wärmetauscher zusammenwirken. In einem Kühlbetrieb wird der Flüssigkeits-Kühlmittel-Kreislauf des Gaskühlers mit dem Außenluft-Wärmetauscher und der Flüssigkeits-Kühlmittel-Kreislauf des Verdampfers mit dem Innenraum-Wärmetauscher gekoppelt. Auf diese Weise können die bestehenden Elemente der Einrichtung sehr effektiv genutzt werden, sodass diese sehr kompakt ist.

Ein weiteres Ausführungsbeispiel der Heiz-/ Kühleinrichtung zeichnet sich dadurch aus, dass der Flüssigkeits-Kühlmittel-Kreislauf des Gaskühlers mit mindestens zwei Umschaltventilen zusammenwirkt, welche das Flüssigkeits-Kühlmittel je nach Betriebsart dem Innenraum-Wärmetauscher oder dem Außenluft-Wärmetauscher zuführen, und dass der Flüssigkeits-Kühlmittel-Kreislauf des Verdampfers mit mindestens zwei Umschaltventilen zusammenwirkt, welche das Flüssigkeits-Kühlmittel je nach Betriebsart dem Außenluft-Wärmetauscher oder dem Innenraum-Wärmetauscher zuführen.

Bevorzugt wird überdies ein Ausführungsbeispiel, das sich dadurch auszeichnet, dass der Verdichter in dem Flüssigkeits-Kühlmittel-Kreislauf, der mit dem Außenluft-Wärmetauscher zusammenwirkt, einbezogen ist, sodass im Betrieb des Verdichters entstehende Wärme abführbar ist und gegebenenfalls im Heizbetrieb den Wirkungsgrad der Einrichtung erhöht.

Bevorzugt wird weiterhin ein Ausführungsbeispiel der Heiz-/Kühleinrichtung, die sich dadurch auszeichnet, dass zwischen dem Flüssigkeits-Kühlmittel-Kreislauf des Gaskühlers und dem Flüssigkeits-Kühlmittel-Kreislauf des Verdampfers ein Ventil vorgesehen ist, über das Wärme aus dem Flüssigkeits-Kühlmittel-Kreislauf des Gaskühlers im Heizbetrieb in den Verdampfer einbringbar ist. Dies erhöht den Wirkungsgrad der Einrichtung in dieser Betriebsart.

Bei einem bevorzugten Ausführungsbeispiel der Heiz-/Kühleinrichtung ist vorgesehen, dass das Ventil als Rückschlagventil oder elektrisches beziehungsweise thermostatisches Ventil ausgebildet ist.

Schließlich wird ein Ausführungsbeispiel der Heiz-/Kühleinrichtung bevorzugt, das sich dadurch auszeichnet, dass zwischen dem Flüssigkeits-Kühlmittel-Kreislauf des Gaskühlers und dem Flüssigkeits-Kühlmittel-Kreislauf des Verdampfers ein Mischventil vorgesehen ist, welchem warmes Flüssigkeits-Kühlmittel aus einem der beiden Flüssigkeits-Kühlmittel-Kreisläufe und/oder kaltes Flüssigkeits-Kühlmittel aus dem anderen Flüssigkeits-Kühlmittel-Kreislauf zugeführt wird. Das dem Mischventil entnehmbare Flüssigkeits-Kühlmittel steht damit zur Temperierung eines Verbrauchers zur Verfügung, beispielsweise eines Akkumulators.

Aufgabe der Erfindung ist es auch, ein Heiz-/Kühl-Modul für eine Heiz-/Kühleinrichtung zu schaffen, welches möglichst kompakt ist, möglichst wenige Ventile und insbesondere möglichst wenige Anschlüsse zur Verbindung mit einer Peripherie, insbesondere einer Fahrzeugperipherie aufweist.

Diese Aufgabe wird gelöst, indem ein Heiz-/Kühl-Modul mit den Merkmalen des Anspruchs 13 geschaffen wird. Dieses weist einen ersten Eingang auf, der mit dem Kühlmittel-Eingang eines Gaskühlers in Fluidverbindung steht. Es umfasst außerdem einen ersten Ausgang. Der erste Eingang steht mit dem ersten Ausgang in Fluidverbindung, wodurch ein erster Teil-Flüssigkeits-Kühlmittel-Kreislauf gebildet wird. Es weist außerdem einen zweiten Eingang und einen zweiten Ausgang auf, wobei der zweite Ausgang mit dem Kühlmittel-Ausgang eines Verdampfers in Fluidverbindung steht. Der zweite Eingang steht mit dem zweiten Ausgang in Fluidverbindung, wodurch ein zweiter Teil-Flüssigkeits-Kühlmittel-Kreislauf gebildet wird. Das Modul weist außerdem einen Verdichter auf. Es zeichnet sich durch eine Ventileinrichtung aus, durch welche der Verdichter wahlweise dem ersten oder dem zweiten Teil-Flüssigkeits-Kühlmittel-Kreislauf zuordenbar ist. Eine entsprechende Ventileinrichtung kommt mit wenigen Ventilen aus. Dadurch, dass die Ventileinrichtung von dem Modul umfasst ist, weist dieses lediglich vier Anschlüsse zu einer Peripherie auf, nämlich den ersten und den zweiten Eingang sowie den ersten und den zweiten Ausgang. Das Modul ist daher sehr kompakt und einfach aufgebaut. Die Peripherie umfasst insbesondere den Innenraum-Wärmetauscher und den Außenluft-Wärmetauscher der Heiz-/Kühleinrichtung, für die das Heiz-/Kühl-Modul bestimmt ist, so dass vollständige Flüssigkeits-Kühlmittel-Kreisläufe realisiert werden, wenn das Modul in eine Peripherie, vorzugsweise in ein Fahrzeug integriert ist.

Bevorzugt wird ein Heiz-/Kühl-Modul, bei dem durch die Ventileinrichtung wahlweise der zweite Eingang mit dem Kühlmittel-Eingang des Verdampfers oder der Kühlmittel-Ausgang des Gaskühlers mit dem ersten Ausgang verbindbar ist. Hierdurch wird sichergestellt, dass das Heiz-/Kühl-Modul die Funktionalität umfasst, die zum Betrieb der Heiz-/Kühleinrichtung notwendig ist.

Es wird auch ein Heiz-/Kühl-Modul bevorzugt, bei dem die Ventileinrichtung zwei vorzugsweise motorgesteuerte Umschaltventile aufweist. Besonders bevorzugt ist durch diese der Kühlmittel-Eingang des Verdichters mit dem zweiten Eingang oder mit dem Kühlmittel-Ausgang des Gaskühlers verbindbar. Zugleich ist bevorzugt der Kühlmittel-Ausgang des Verdichters mit dem Kühlmittel-Eingang des Verdampfers oder mit dem ersten Ausgang verbindbar. Auf diese Weise kann das Heiz-/Kühl-Modul eine möglichst geringe Zahl von Ventilen umfassen.

Bevorzugt wird auch ein Heiz-/Kühl-Modul, bei dem die Ventileinrichtung eine Ventilvorrichtung umfasst. Durch diese ist vorzugsweise der zweite Eingang mit dem Kühlmittel-Eingang des Verdampfers verbindbar, oder es ist der Kühlmittel-Ausgang des Gaskühlers mit dem ersten Ausgang verbindbar. Besonders bevorzugt kann zwischen diesen Verbindungen hin- und hergeschaltet werden.

Es wird ein Heiz-/Kühl-Modul bevorzugt, bei dem die Ventilvorrichtung als Motorventil mit zwei gegensinnig verstellbaren Ventilstellgliedern ausgebildet ist. Insgesamt umfasst damit die Ventileinrichtung bevorzugt drei Motorventile, nämlich zwei motorgesteuerte Umschaltventile und ein Motorventil mit zwei gegensinnig verstellbaren Ventilstellgliedern. Es zeigt sich, dass das Heiz-/Kühl-Modul dann besonders wenige Ventile umfasst.

Schließlich wird auch ein Heiz-/Kühl-Modul bevorzugt, bei dem die Ventilvorrichtung zwei temperaturgesteuerte Ventile umfasst. Insgesamt umfasst dann die Ventileinrichtung bevorzugt zwei motorgesteuerte Umschaltventile und zwei temperaturgesteuerte Ventile. Auch in diesem Fall ist also nur eine geringe Zahl von Ventilen in dem Heiz-/Kühl-Modul vorgesehen. Das Heiz-/Kühlmodul ist sehr kompakt und weist außerdem nur eine geringe Zahl von Anschlüssen auf. Weitere, zum Betrieb der Heiz-/Kühleinrichtung gegebenenfalls notwendige Ventile sind in die Peripherie verlagert. Es ist dadurch möglich, ein sehr kompaktes Heiz-/Kühl-Modul anzubieten, welches auf Seiten der Peripherie mit zusätzlicher Funktionalität erweiterbar ist.

Weitere vorteilhafte Ausgestaltungen ergeben sich aus den Unteransprüchen.

Die Erfindung wird im Folgenden anhand der Zeichnung näher erläutert. Es zeigen
- Figur 1: eine Prinzipskizze einer Heiz-/Kühleinrichtung im Heizbetrieb;
- Figur 2: eine Prinzipskizze einer Heiz-/Kühleinrichtung im Kühlbetrieb;
- Figur 3: eine Prinzipskizze einer Heiz-/Kühleinrichtung mit einer Darstellung der Verschaltung der einzelnen Elemente der Heiz-/Kühleinrichtung;
- Figur 4: eine Prinzipskizze eines Ausführungsbeispiels eines Heiz-/Kühl-Moduls, und
- Figur 5: eine Prinzipskizze eines zweiten Ausführungsbeispiels eines Heiz-/Kühl-Moduls.

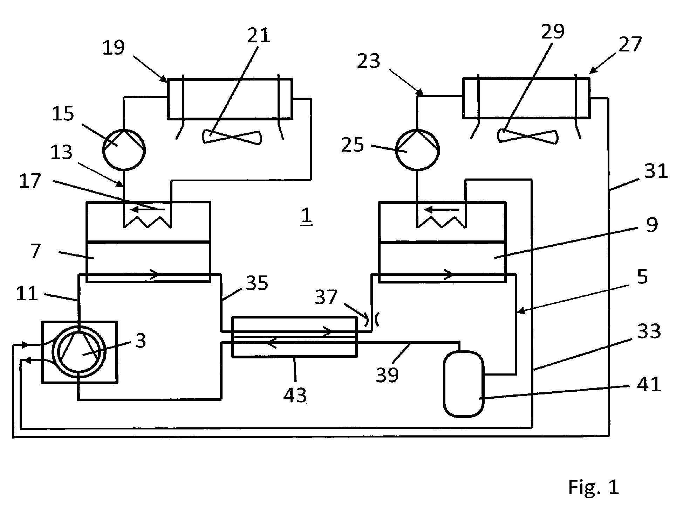

Figur 1 ist eine Heiz-/Kühleinrichtung 1 mit einem Verdichter 3, einem Kältemittel-Kreislauf 5, einem Gaskühler 7 und mit einem Verdampfer 9 zu entnehmen. In dem Kältemittel-Kreislauf wird ein Kältemittel im Verdichter 3 komprimiert und über eine Leitung 11 dem Gaskühler 7 zugeführt. Hier kann die durch die Kompression erzeugte Wärme abgeführt werden. Dazu ist der Gaskühler mit einem ersten Flüssigkeits-Kühlmittel-Kreislauf 13 gekoppelt, an den die Wärme des Kältemittels abgeführt wird. Der erste Flüssigkeits-Kühlmittel-Kreislauf umfasst eine Pumpe 15, die das Flüssigkeits-Kühlmittel entsprechend dem Pfeil 17 zirkulieren lässt. Der Pumpe 15 ist ein Innenraum-Wärmetauscher 19 nachgeordnet, der von dem Flüssigkeits-Kühlmittel durchströmt wird. Die Wärme des Flüssigkeits-Kühlmittels wird über den Innenraum-Wärmetauscher in den Innenraum eingebracht, wobei vorzugsweise ein Ventilator 21 vorgesehen ist, der für eine Luftströmung durch den Wärmetauscher sorgt.

Das aus dem Innenraum-Wärmetauscher 19 austretende Medium gelangt im Flüssigkeits-Kühlmittel-Kreislauf 13 zurück in den Gaskühler, und steht damit zur Verfügung, aus dem komprimierten Kältemittel resultierende Wärme abzuführen.

Figur 1 ist auch zu entnehmen, dass dem Verdampfer 9 ein zweiter Flüssigkeits-Kühlmittel-Kreislauf 23 zugeordnet ist, der eine Pumpe 25 umfasst, außerdem einen dieser nachgeordneten Außenluft-Wärmetauscher 27, der von einem, vorzugsweise durch einen Ventilator 29 erzeugten, Luftstrom durchströmt wird. Das im zweiten Flüssigkeits-Kühlmittel-Kreislauf 23 vorhandene Flüssigkeits-Kühlmittel gelangt über eine Leitung 31 vom Außenluft-Wärmetauscher zum Verdichter 3. Das Flüssigkeits-Kühlmittel dient dazu, die Betriebswärme des Verdichters abzuführen und über eine Leitung 33 dem Verdampfer 9 zuzuführen. Im Heizbetrieb wird die Abwärme des Verdichters 3 in den Kältemittel-Kreislauf eingekoppelt, damit wirkt der Verdichter 3 als nutzbringende Wärmequelle.

Das aus dem Gaskühler 7 strömende Kältemittel gelangt über eine Leitung 35 zu einem Expansionsventil 37. Das von dem Verdichter komprimierte Medium expandiert in dem Leitungsbereich nach dem Expansionsventil 37 und gelangt stark abgekühlt in den Verdampfer 9. Das kalte, expandierte Kältemittel wird durch über den Außenluft-Wärmetauscher 27 gewonnene Energie und durch die im Betrieb gegebene Abwärme des Verdichters aufgewärmt, bevor es wieder dem Verdichter zugeführt wird.

In der vom Verdampfer 9 zum Verdichter 3 führenden Leitung 39 ist vorzugsweise ein Speicher 41 vorgesehen, der als Ausgleichsbehälter für das Kältemittel im Kältemittel-Kreislauf 5 dient.

Um das vom Gaskühler 7 zum Verdampfer 9 strömende Kältemittel abzukühlen, kann ein interner Wärmetauscher 43 vorgesehen werden, der einerseits von dem zum Verdampfer strömenden Medium und andererseits von dem zum Verdichter fließenden Medium durchströmt wird. Es wird hier eine Wärmeübertragung vorgesehen, um den Wirkungsgrad des Kältemittel-Kreislaufs zu erhöhen.

Figur 1 zeigt also Folgendes:

Es ist ein üblicher Kältemittel-Kreislauf 5 mit einem Verdichter 3, einem Gaskühler 7 und einem Verdampfer 9 vorgesehen. Um die Wärme im Gaskühler 7 besonders effektiv abführen zu können, wird der Gaskühler von einem flüssigen Kühlmedium durchströmt. Entsprechendes gilt für den Verdampfer. Auch hier wird ein besonders effektiver Wärmetausch erreicht, weil der Verdampfer 9 von einem flüssigen Kühlmedium durchströmt wird, das Energie vom Außenluft-Wärmetauscher 27 und Abwärme des Verdichters 3 aufnehmen kann.

Dadurch, dass der Gaskühler 7 und der Verdampfer 9 mit einem flüssigen Kühlmedium zusammenwirken, also ein sehr effektiver Wärmeaustausch gegeben ist, bedarf es relativ kleiner Wärmeaustauschflächen, sodass diese Bauelemente sehr kompakt ausgebildet werden können.

Dies führt dazu, dass die Heiz-/Kühleinrichtung 1 relativ klein ausgebildet werden kann, und dass die einzelnen Bauteile vergleichsweise preiswert sind.

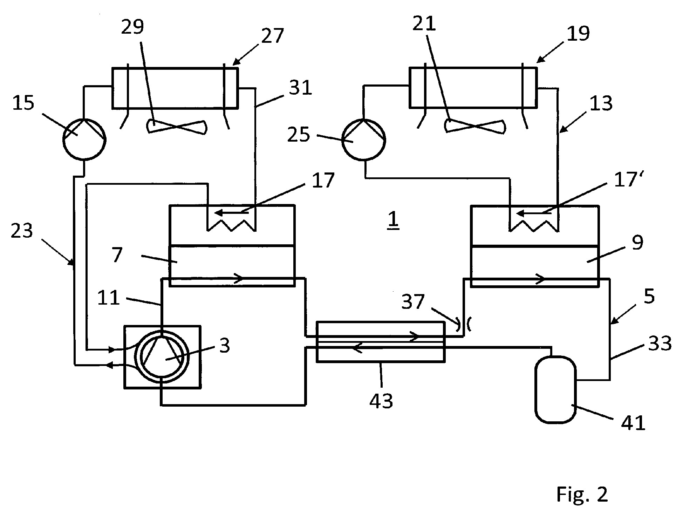

Figur 2 zeigt die Heiz-/Kühleinrichtung in einem anderen Betriebszustand, nämlich im Kühlbetrieb.

Gleiche und funktionsgleiche Teile sind mit gleichen Bezugsziffern versehen, sodass insofern auf die Beschreibung zu Figur 1 verwiesen wird.

Aus Figur 2 ist ersichtlich, dass der Kältemittel-Kreislauf 5 identisch aufgebaut ist wie in Figur 1. Er umfasst also einen Verdichter 3, einen Gaskühler 7, einen Verdampfer 9, einen Speicher 41 und vorzugsweise einen internen Wärmetauscher 43. Das Kältemittel wird von dem Verdichter 3 komprimiert und über eine Leitung 11 zum Gaskühler 7 gefördert, wo die durch die Kompression entstehende Wärme abgeführt werden kann. Das komprimierte Kältemittel gelangt durch den internen Wärmetauscher 43 über das Expansionsventil 37 in den Verdampfer 9, wo es eine deutlich niedrigere Temperatur als im Gaskühler 7 aufweist. Das abgekühlte Kältemittel gelangt vom Verdampfer 9 über die Leitung 33, den Speicher 41 und den internen Wärmetauscher 43 zum Verdichter 3, wodurch der Kältemittel-Kreislauf 5 geschlossen ist.

Der Gaskühler 7 wird von einem Flüssigkeits-Kühlmittel in Richtung des Pfeils 17 durchströmt, welches die Abwärme des Verdichters 3 aufnimmt und, gefördert von der Pumpe 15, hier zum Außenluft-Wärmetauscher 27 gelangt. Über den Außenluft-Wärmetauscher 27 wird die Betriebs- beziehungsweise Abwärme des Verdichters 3 abgeführt, sodass sie nicht in den Kältemittelkreislauf 5 gelangt. Durch die Abfuhr dieser Wärme wird gewährleistet, dass der Kühlprozess nicht beeinträchtigt wird. Dem Außenluft-Wärmetauscher 27 wird über den zweiten Flüssigkeits-Kühlmittel-Kreislauf 23 auch vom Gaskühler 7 auf das Flüssigkeits-Kühlmittel übertragene Energie zugeführt. Diese wird ebenso wie die Abwärme des Verdichters 3 an die Umgebung abgegeben. Vorzugsweise wird hierzu ein Ventilator 29 eingesetzt, der gezielt den Luftstrom durch den Außenluft-Wärmetauscher 27 fördert. Figur 2 lässt deutlich erkennen, dass der zweite Flüssigkeits-Kühlmittel-Kreislauf 23 im Kühlbetrieb der Heiz-Kühleinrichtung 1 mit dem Gaskühler 7 gekoppelt ist, und nicht mehr mit dem Verdampfer 9. Der zweite Flüssigkeits-Kühlmittel-Kreislauf 23 ist also hier anders zugeordnet als im Heizbetrieb gemäß Figur 1.

Entsprechend ist der erste Flüssigkeits-Kühlmittel-Kreislauf 13 im Kühlbetrieb mit dem Verdampfer 9 gekoppelt, sodass das im ersten Flüssigkeits-Kühlmittel-Kreislauf 13 vorhandene Medium in Richtung des Pfeils 17 durch den Verdampfer 9 gefördert wird, wobei hier die Pumpe 25 den Kühlmitteltransport bewerkstelligt.

Auch im Kühlbetrieb soll das den Verdampfer 9 durchströmende kalte Kältemittel erwärmt werden. Dazu wird über den ersten Flüssigkeits-Kühlmittel-Kreislauf 13 mittels des Innenraum-Wärmetauschers 19 Energie übertragen. Vorzugsweise wird der Innenraum-Wärmetauscher 19 von einem Luftstrom durchzogen, der bevorzugt durch einen Ventilator 21 intensiviert werden kann.

Entscheidend ist, dass die Heiz-/Kühleinrichtung gemäß Figur 2 im Kühlbetrieb und Heizbetrieb wiederum besonders vorteilhaft ist, weil der Gaskühler 7 und der Verdampfer 9 von einem flüssigen Kühlmittel durchströmt werden, sodass ein besonders guter Wärmetransport gewährleistet ist, weil beim Wärmeübergang von dem flüssigen Kühlmittel auf das flüssige Kältemittel viel Wärme bei geringem Bauraum übertragen werden kann.

Ein Vergleich der Figuren 1 und 2 zeigt, dass der Grundaufbau der Heiz-/Kühleinrichtung gemäß den Figuren 1 und 2 gleich bleibt, und dass die Anzahl der Bauteile unverändert ist. Es bedarf lediglich einer Vertauschung der Kopplung der Flüssigkeits-Kühlmittel-Kreisläufe im Heiz- und Kühlbetrieb.

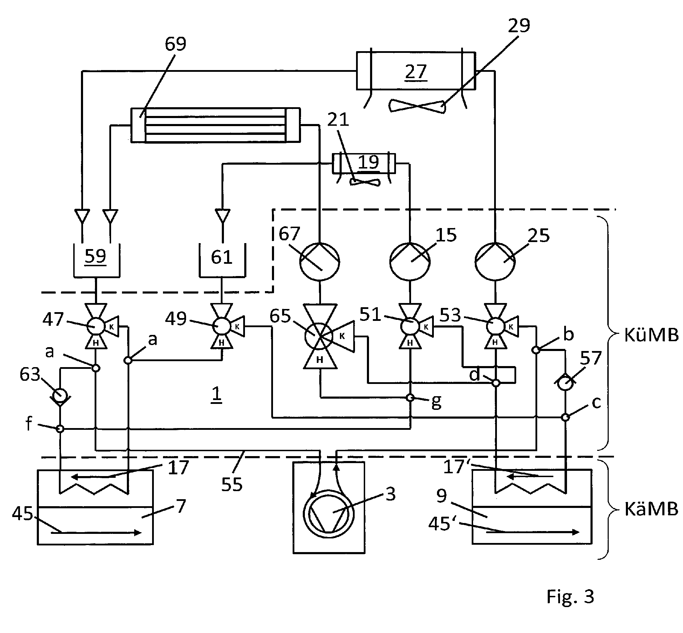

Die Realisierung der Umschaltung der Flüssigkeits-Kühlmittel-Kreisläufe ist aus Figur 3 ersichtlich. Auch hier sind gleiche und funktionsgleiche Elemente mit gleichen Bezugsziffern versehen, sodass insofern auf die Beschreibung zu den Figuren 1 und 2 verwiesen wird.

In Figur 3 sind der Verdichter 3, der Gaskühler 7 und der Verdampfer 9 dargestellt. Auch sind der erste Flüssigkeits-Kühlmittel-Kreislauf 13 sowie der zweite Flüssigkeits-Kühlmittel-Kreislauf 23 erkennbar. Aus Gründen der besseren Übersichtlichkeit ist in Figur 3 der Kältemittel-Kreislauf 5, wie er in den Figuren 1 und 2 wiedergegeben ist, nicht dargestellt. Er ist aber identisch aufgebaut wie oben beschrieben. Durch einen Pfeil 45 im Gaskühler 7 und einen Pfeil 45' im Verdampfer 9 ist angedeutet, dass diese Bauteile vom Kältemittel, vorzugsweise im Gegenstrom zum Flüssigkeits-Kühlmittel, durchströmt werden.

Figur 3 zeigt auch den Innenraum-Wärmetauscher 19 sowie den Außenluft-Wärmetauscher 27, die mit einem Luftstrom beaufschlagt werden, der vorzugsweise, insbesondere beim Innenraum-Wärmetauscher 19, von einem Ventilator 21 beziehungsweise 29 beim Außenluft-Wärmetauschers 27 bewirkt wird. Gegebenenfalls kann auf den Ventilator 29 im Zusammenhang mit dem Außenluft-Wärmetausche 27 verzichtet werden, wenn auf andere Weise eine Luftströmung erzeugt wird.

In Figur 3 sind außerdem die dem Innenraum-Wärmetauscher 19 zugeordnete Pumpe 15 und die dem Außenluft-Wärmetauscher 27 zugeordnete Pumpe 25 ersichtlich, welche dazu dienen, den Flüssigkeits-Kühlmittel-Kreislauf durch die beiden Wärmetauscher 19 und 27 sicherzustellen.

Anhand der Figuren 1 und 2 wurde allgemein dargestellt, dass der erste Flüssigkeits-Kühlmittel-Kreislauf 13 und der zweite Flüssigkeits-Kühlmittel-Kreislauf 23 je nach Betriebszustand entweder dem Gaskühler 7 oder dem Verdampfer 9 zugeordnet werden. Hier in Figur 3 wird anhand von Umschaltventilen erläutert, wie eine derartige Umschaltung vorzugsweise realisiert wird.

In Figur 3 sind vier Umschaltventile 47, 49, 51 und 53 zu entnehmen, die mit drei Anschlüssen versehen sind. Ein erster Anschluss ist mit H gekennzeichnet, ein zweiter mit K. Ein Dritter ist ohne Kennzeichnung. Mit den Buchstaben wird angedeutet, dass im Heizbetrieb ein Durchlass zwischen dem Anschluss H und dem Anschluss ohne Bezeichnung besteht. Der Anschluss K ist gesperrt. Entsprechend ist im Kühlbetrieb der Heiz-/Kühleinrichtung 1 ein Durchlass in den Umschaltventilen 47, 49, 51 und 53 zwischen dem Anschluss K und dem Anschluss ohne Bezeichnung gegeben, während der Anschluss mit dem Buchstaben H gesperrt ist.

In dem in Figur 1 wiedergegebenen Heizbetrieb der Heiz-/Kühleinrichtung 1 ist gemäß Figur 3 also der Anschluss K aller Umschaltventile gesperrt. Über den Anschluss H ist das erste Umschaltventil 47 über den Knotenpunkt a und über eine Leitung 55 mit dem Verdichter 3 derart verbunden, dass dessen Betriebswärme abgeführt und über einen Knoten b, ein Rückschlagventil 57 und einen Knoten c dem Verdampfer 9 zugeführt wird. Dieser ist über eine zu einem Knoten d führende Leitung und über den Anschluss H des Umschaltventils 53 sowie über die Pumpe 25 mit dem Außenluft-Wärmetauscher 27 verbunden.

Von dem Außenluft-Wärmetauscher 27 gelangt das Flüssigkeits-Kühlmittel in einen Tank 59, und von diesem über den nicht markierten Anschluss des Umschaltventils 47 zurück zu dessen Anschluss H.

Im Heizbetrieb wird also der zweite Flüssigkeits-Kühlmittel-Kreislauf 23 realisiert, der in Figur 1 wiedergegeben ist: Ein Flüssigkeits-Kühlmittel strömt also in diesem Kreislauf um den Verdichter 3, um hier Abwärme aufzunehmen, durch den Verdampfer 9 und von dort durch den Anschluss H des Umschaltventils 53 zum Außenluft-Wärmetauscher 27 und von dort zurück zum Umschaltventil 47.

Außerdem wird im Heizbetrieb der aus Figur 1 ersichtliche erste Flüssigkeits-Kühlmittel-Kreislauf 13 realisiert. Im Heizbetrieb gelangt also das Flüssigkeits-Kühlmittel vom Anschluss H des Umschaltventils 49 zu einem Knotenpunkt e. Es kann nicht durch das Umschaltventil 47 strömen, weil dort der Anschluss K gesperrt ist. Das Flüssigkeits-Kühlmittel gelangt vielmehr zum Gaskühler 7 und durchströmt diesen in Richtung des Pfeils 17. Dadurch gelangt es zu einem Knoten f und von dort zu einem Knoten g und von hier zum Anschluss H des Umschaltventils 51. Über dessen Anschluss ohne Bezeichnung gelangt es zur Pumpe 15 und von dort zum Innenraum-Wärmetauscher 19 und weiter zu einem Tank 61, aus dem es dann durch das Umschaltventil 49 über dessen Anschluss ohne Markierung zu dessen Anschluss H gelangt. Es ergibt sich also auch hier ein geschlossener Kreislauf, der dem ersten Flüssigkeits-Kühlmittel-Kreislauf 13 in Figur 1 entspricht.

Im Folgenden wird auf den anhand von Figur 2 erläuterten Kühlbetrieb eingegangen, bei dem gemäß Figur 3 alle Anschlüsse H der Umschaltventile 47, 49, 51 und 53 gesperrt und alle Anschlüsse K offen sind und eine Verbindung zu den Anschlüssen ohne Kennzeichnung der jeweiligen Ventile bilden.

Das Flüssigkeits-Kühlmittel gelangt also im Kühlbetrieb über den Anschluss K des Umschaltventils 47 zum Knotenpunkt e und von dort entsprechend dem Pfeil 17 durch den Gaskühler 7 zum Knotenpunkt f. Über den Knotenpunkt f kann das Medium nicht durch das Umschaltventil 51 weiterströmen, weil es über den Knoten g auf den geschlossenen Anschluss H dieses Ventils trifft. Vielmehr gelangt das Flüssigkeits-Kühlmittel über den Knotenpunkt f und über ein hier als Rückschlagventil ausgebildetes Ventil 63 zum Knoten a. Bei der Strömungsrichtung des Flüssigkeits-Kühlmittels vom Knoten f zum Knoten a öffnet sich also das Rückschlagventil 63. Es verhindert aber eine Strömung in umgekehrter Richtung vom Knoten a zum Knoten f.

Das am Knoten a anliegende Flüssigkeits-Kühlmittel kann über den gesperrten Anschluss H des Umschaltventils 47 nicht weiterströmen. Es fließt daher über die Leitung 55 zum Verdichter 3, um dort dessen Betriebswärme aufzunehmen, und weiter zum Knotenpunkt b. Ein Durchfluss zum Verdampfer 9 wird wegen des höheren Drucks im Knotenpunkt c durch das Rückschlagventil 57 verhindert. Das Flüssigkeits-Kühlmittel gelangt daher vom Knoten b über den Anschluss K des Umschaltventils 53 zu dessen unbezeichnetem Anschluss, über die Pumpe 25 und den Außenluft-Wärmetauscher 27 zum Tank 59. Dieser ist mit dem nicht gekennzeichneten Anschluss des Umschaltventils 47 verbunden, sodass das Flüssigkeits-Kühlmittel vom Tank 59 zum Anschluss K des Umschaltventils 47 gelangen kann und der im Kühlbetrieb gegebene Flüssigkeits-Kühlmittel-Kreislauf geschlossen ist. Es wird damit der in Figur 2 dargestellte zweite Flüssigkeits-Kühlmittel-Kreislauf 23 realisiert.

Im Kühlbetrieb gelangt das Flüssigkeits-Kühlmittel vom Anschluss K des Umschaltventils 49 zum Knoten c und, weil das Rückschlagventil 57 geschlossen ist, von dort entsprechend dem Pfeil 17' durch den Verdampfer 9 zum Knoten d. Es fließt weiter von dort zum Anschluss K des Umschaltventils 51 und über dessen Anschluss ohne Kennzeichnung und die Pumpe 15 zum Innenraum-Wärmetauscher 19. Es fließt von dort aus weiter zum Tank 61 und gelangt damit in den Anschluss ohne Kennzeichnung des Umschaltventils 49. Damit ist für den Kühlbetrieb der erste Flüssigkeits-Kühlmittel-Kreislauf 13 gemäß Figur 2 realisiert.

Das Rückschlagventil 63 ist vorzugsweise so ausgebildet, dass im Heizbetrieb gezielt eine Leckage realisiert wird. Das heißt, zum Knotenpunkt f gelangendes Flüssigkeits-Kühlmittel kann bei der gezielten Leckage über das Rückschlagventil 63 zum Knotenpunkt a gelangen, und von dort über den Verdichter 3 zum Knotenpunkt b. In diesem Fall, also bei der gewollten Leckage, gelangt das Flüssigkeits-Medium über das Rückschlagventil 57 zum Knotenpunkt c und von dort aus zum Verdampfer 9, sodass aus dem Gaskühler 7 zusätzliche Energie, also nicht nur die Abwärme des Verdichters 3, in den Verdampfer 9 eingespeist wird. Dies ist insbesondere in einer ersten Aufheizphase im winterlichen Heizbetrieb sinnvoll. Auf diese Weise wird gezielt eine Verbindung zwischen dem ersten Flüssigkeits-Kühlmittel-Kreislauf 13 und dem zweiten Flüssigkeits-Kühlmittel-Kreislauf 23 geschaffen.

Das Rückschlagventil 63 kann auch als elektrisches oder thermostatisches Ventil ausgebildet werden, wenn gezielt eine derartige Ansteuerung gewünscht ist.

Aus den Erläuterungen zu Figur 3 und der Darstellung der Funktionsweise der Umschaltventile 47, 49, 51 und 53 wird deutlich, dass durch entsprechende Umschaltung dieser Ventile die Strömung des Flüssigkeits-Kühlmittels so gesteuert wird, dass im Heizbetrieb der Außenluft-Wärmetauscher 27 mit dem Verdampfer 9 gekoppelt ist, und der Innenraum-Wärmetauscher 19 mit dem Gaskühler 7. Dies ist auch aus Figur 1 ersichtlich.

Im Kühlbetrieb gemäß Figur 2 wird mittels der Umschaltventile 47, 49, 51 und 53 die Flüssigkeits-Kühlmittelströmung so gesteuert, dass der Innenraum-Wärmetauscher 13 mit dem Verdampfer 9 und der Außenluft-Wärmetauscher 27 mit dem Gaskühler 7 gekoppelt ist.

Die hier erläuterte Heiz-/Kühleinrichtung 1 ist vorzugsweise mit einem Mischventil 65 ausgestattet, welches einen Anschluss H, einen Anschluss K und einen Anschluss ohne Bezeichnung aufweist. Mit Hilfe dieses Mischventils 65 kann gezielt die aus dem Anschluss H und aus dem Anschluss K zum Anschluss ohne Kennzeichnung gelangende Menge an Flüssigkeits-Kühlmittel eingestellt werden. Das Medium wird von einer Pumpe 67 zu einem Verbraucher gefördert und weiter zum Tank 59. Der Verbraucher kann also mit einem temperierten Flüssigkeits-Kühlmittel beaufschlagt und, je nach Einstellung des Mischventils, gekühlt oder gewärmt werden. Beispielsweise kann ein Akkumulator 69 mit einem Flüssigkeits-Kühlmittel beaufschlagt werden, dessen Temperatur mit Hilfe des Mischventils 65 auf einen gewünschten Wert einstellbar ist. Der Akkumulator 69 kann also gewärmt oder gekühlt werden.

Das Mischventil 65 ist über seinen Anschluss H mit dem Knotenpunkt g verbunden, dem wärmsten Punkt des Flüssigkeits-Kühlmittel-Systems. Entsprechend ist der Anschluss K des Mischventils 65 mit dem Knotenpunkt d verbunden, dem kältesten Punkt des Flüssigkeits-Kühlmittel-Systems.

Das Mischventil 65 ist vorzugsweise als elektrisch geregeltes oder thermostatisches Ventil ausgebildet, wobei grundsätzlich haushaltsübliche Mischventile eingesetzt werden könnten.

Aus den Erläuterungen der Figur 3 wird deutlich, dass auf einfache Weise eine Umschaltung der Flüssigkeits-Kühlmittel-Kreisläufe möglich ist und damit eine unterschiedliche Kopplung des Innenraum-Wärmetauschers 19 beziehungsweise des Außenluft-Wärmetauschers 27 mit dem Gaskühler 7 beziehungsweise dem Verdampfer 9, je nach Betriebszustand, wie dies anhand der Figuren 1 und 2 erläutert wurde.

Die Heiz-/Kühleinrichtung 1 ist vorzugsweise sehr kompakt aufgebaut, indem die Pumpen 15 und 25, gegebenenfalls auch die Pumpe 67, gemeinsam mit den Umschaltventilen 47, 49, 51 und 53, gegebenenfalls auch mit dem Mischventil 65, zu einer Baueinheit beziehungsweise zu einem Funktionsblock, dem Kühlmittelblock KüMB, zusammengefasst werden können. Der Gaskühler 7, der Verdichter 3, der Verdampfer 9 und der nicht in Figur 3, jedoch in den Figuren 1 und 2 dargestellte Kältemittel-Kreislauf 5 können aber auch als separater Kältemittelblock KäMB ausgebildet sein. Oberhalb des Kühlmittelblocks KüMB ist die Fahrzeugperipherie angeordnet, mit welcher der Kühlmittelblock KüMB in Wirk- und Fluidverbindung steht. Schließlich ist es möglich, den Kühlmittelblock KüMB und den Kältemittelblock KäMB zu einem einzigen kompakten Block beziehungsweise zu einer Gesamt-Baueinheit zusammenzufassen.

In Figur 3 sind die Fahrzeugperipherie sowie der Kühlmittelblock KüMB und der Kältemittelblock KäMB durch gestrichelte Linien voneinander abgegrenzt.

Die hier beschriebene Heiz-/Kühleinrichtung 1 dient der Beheizung und Kühlung von Fahrzeugen, insbesondere von Kraftfahrzeugen, die als Elektro- und Hybrid-Fahrzeuge ausgebildet sind. Da diese Einrichtung sehr kompakt gebaut ist, eben auch wegen der Wärmeübertragung im Gaskühler 7 beziehungsweise im Verdampfer 9 auf ein Flüssigkeits-Kühlmittel, ist die Einrichtung auch in kleinen Fahrzeugen ohne Weiteres verwendbar.

Aus den Erläuterungen zu Figur 3 wird noch deutlich, dass bei einem ausreichenden natürlichen Temperaturgefälle zwischen Innenraum des Fahrzeugs und Umgebung ein Wärmetransport ohne Einsatz des Verdichters und des Kältemittel-Kreislaufes möglich ist. In diesem Fall werden die Anschlüsse K der Umschaltventile 47 und 49 auf Durchlass zum nicht markierten Anschluss geschaltet und die Anschlüsse H der Umschaltventile 47 und 53 auf Durchlass zum nicht markierten Anschluss.

Es zeigt sich also, dass die hier beschriebene Heiz-/Kühleinrichtung 1 sehr flexibel einsetzbar ist.

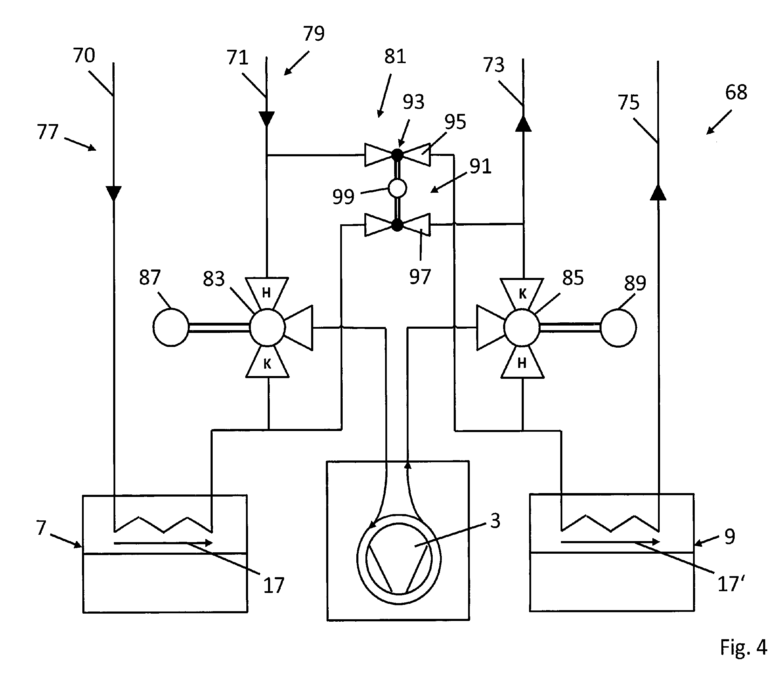

Figur 4 zeigt ein Heiz-/Kühl-Modul 68 für die Heiz-/Kühleinrichtung 1. Gleiche und funktionsgleiche Elemente sind mit gleichen Bezugszeichen versehen, so dass insoweit auf die vorangegangene Beschreibung verwiesen wird. Das Heiz-/Kühl-Modul 68 ist sehr kompakt ausgebildet und umfasst insbesondere eine minimale Zahl von Anschlüssen und Ventilen. Es kann mit einer nicht dargestellten Peripherie einer Vorrichtung, welche eine Heiz-/Kühleinrichtung 1 aufweist, verbunden werden, beispielsweise mit einer Fahrzeugperipherie.

Das Heiz-/Kühl-Modul 68 weist einen ersten Eingang 70, einen zweiten Eingang 71, einen ersten Ausgang 73 und einen zweiten Ausgang 75 für ein Flüssigkeits-Kühlmittel auf. Es sind also insgesamt vier Anschlüsse zur Verbindung mit der Peripherie vorgesehen.

Das Heiz-/Kühl-Modul 68 umfasst den Gaskühler 7, den Verdichter 3 und den Verdampfer 9.

Diese Elemente sind wie bereits erläutert Teil eines Kältemittel-Kreislaufs, der in Figur 4 nicht dargestellt ist. Bezüglich desssen Aufbaus und Funktionsweise wird auf die vorangegangene Beschreibung verwiesen.

Der erste Eingang 70 ist mit dem Kühlmittel-Eingang des Gaskühlers 7 verbunden, wobei das Kühlmittel diesen in Richtung des Pfeils 17 durchströmt. Unabhängig von dem Schaltzustand des Heiz-/Kühl-Moduls 68 ist der erste Eingang 70 stets mit dem ersten Ausgang 73 verbunden, so dass ein erster Teil-Flüssigkeits-Kühlmittel-Kreislauf 77 gebildet wird.

Der zweite Ausgang 75 ist mit einem Kühlmittel-Ausgang des Verdampfers 9 verbunden, der in Richtung des Pfeils 17' von dem Kühlmittel durchströmt wird. Unabhängig von dem Schaltzustand des Heiz-/Kühl-Moduls 68 ist der zweite Ausgang 75 stets mit dem ersten Eingang 71 verbunden, so dass hier ein zweiter Teil-Flüssigkeits-Kühlmittel-Kreislauf 79 gebildet wird.

Das Heiz-/Kühl-Modul 68 umfasst außerdem eine Ventileinrichtung 81, durch die der Verdichter 3 entweder dem ersten Teil-Flüssigkeits-Kühlmittel-Kreislauf 77 oder dem zweiten Teil-Flüssigkeits-Kühlmittel-Kreislauf 79 zugeordnet, das heißt in diesen einbezogen werden kann.

Die Ventileinrichtung 81 umfasst bei dem dargestellten Ausführungbeispiel zwei Umschaltventile 83, 85, die vorzugsweise motorgesteuert sind. Hierzu sind in diesem Fall Motoren 87, 89 vorgesehen. Wie bereits zuvor erläutert wurde, umfassen auch die Umschaltventile 83, 85 Anschlüsse, die jeweils mit H, K beziehungsweise nicht gekennzeichnet sind. In einem Heizbetrieb des Heiz-/Kühl-Moduls 68 sind jeweils die Anschlüsse H mit den nicht gekennzeichneten Anschlüssen der Ventile 83, 85 verbunden. Die Anschlüsse K sind entsprechend gesperrt. In einem Kühlbetrieb sind dagegen die Anschlüsse K jeweils mit den nicht gekennzeichneten Anschlüssen verbunden, während die Anschlüsse H gesperrt sind.

Die Ventileinrichtung 81 umfasst vorzugsweise eine Ventilvorrichtung 91. Diese ist bei dem in Figur 4 dargestellten Ausführungsbeispiel als Motorventil 93 ausgebildet, welches zwei Ventilstellglieder 95, 97 umfasst. Es ist ein Motor 99 vorgesehen, durch den die Ventilstellglieder 95, 97 gegensinnig verstellbar sind. Dies bedeutet, dass das Ventilstellglied 97 gesperrt ist, wenn das Ventilstellglied 95 auf Durchlass geschaltet ist. Umgekehrt ist das Ventilstellglied 95 gesperrt, wenn das Ventilstellglied 97 auf Durchlass geschaltet ist.

Im Folgenden wird zunächst der Heizbetrieb des Heiz-/Kühl-Moduls 68 erläutert:
Das Flüssigkeits-Kühlmittel strömt durch den ersten Eingang 70 zu dem Gaskühler 7, in dem es erwärmt wird. Da der Eingang K des Umschaltventils 83 gesperrt ist, strömt das Kühlmittel weiter zum Ventilstellglied 97, welches im Heizbetrieb auf Durchlass geschaltet ist. Von dort strömt es weiter zum ersten Ausgang 73. Es kann nicht durch das Umschaltventil 85 zurückströmen, weil dessen Ausgang K gesperrt ist. Der erste Teil-Flüssigkeits-Kühlmittel-Kreislauf 77 umfasst im Heizbetrieb also den Gaskühler 7, so dass das Kühlmittel hier erwärmt wird. Die Heiz-/Kühleinrichtung 1, welche das Heiz-/Kühl-Modul 68 umfasst, weist bevorzugt geeignete Mittel auf, um den ersten Teil-Flüssigkeits-Kühlmittel-Kreislauf 77 im Heizbetrieb mit dem Innenraum-Wärmetauscher 19 zu verbinden, um den ersten Flüssigkeits-Kühlmittel-Kreislauf 13 gemäß Figur 1 zu realisieren. Der erste Teil-Flüssigkeits-Kühlmittel-Kreislauf 77 ist dann also von dem ersten Flüssigkeits-Kühlmittel-Kreislauf 13 umfasst.

Es zeigt sich auch, dass im Heizbetrieb durch die Ventileinrichtung 81, insbesondere durch die Ventilvorrichtung 91, der Kühlmittel-Ausgang des Gaskühlers 7 mit dem ersten Ausgang 73 verbunden ist.

Kühlmittel, welches durch den zweiten Eingang 79 in das Heiz-/Kühlmodul 68 eintritt, gelangt im Heizbetrieb zu dem Eingang H des Umschaltventils 83, weil das Ventilstellglied 95 gesperrt ist. Der Eingang H des Umschaltventils 83 ist mit dessen nicht gekennzeichnetem Ausgang verbunden. Das Kühlmittel gelangt hierüber zum Verdichter 3. Von dort strömt es zu dem nicht gekennzeichneten Eingang des Umschaltventils 85, wo es durch den mit H gekennzeichneten Ausgang austritt, weil der mit K gekennzeichnete Ausgang gesperrt ist. Da das Ventilstellglied 95 gesperrt ist, strömt das Kühlmittel durch den Verdampfer 9 und von dort zum zweiten Ausgang 75.

Damit zeigt sich, dass im Heizbetrieb durch die Ventileinrichtung 81 der Verdichter 3 mit seinem Kühlmittel-Eingang mit dem zweiten Eingang 71 und mit seinem Kühlmittel-Ausgang mit dem Kühlmittel-Eingang des Verdampfers 9 verbunden ist.

Der zweite Teil-Kühlmittel-Kreislauf 79 umfasst hier also den Verdichter 3 und den Verdampfer 9. Die Heiz-/Kühleinrichtung 1, welche das Heiz-/Kühl-Modul 68 umfasst, weist vorzugsweise Mittel auf, um den zweiten Eingang 71 und den zweiten Ausgang 75 mit dem Außenluft-Wärmetauscher 27 zu verbinden. Der zweite Flüssigkeits-Kühlmittel-Kreislauf 23 umfasst dann den zweiten Teil-Flüssigkeits-Kühlmittel-Kreislauf 79.

Damit zeigt sich, dass im Heizbetrieb letztlich die Flüssigkeits-Kühlmittel-Kreisläufe 13, 23 gemäß Figur 1 realisiert werden, wenn man die Peripherie mit einbezieht. Das Heiz-/Kühl-Modul 68 stellt die entsprechende Funktionalität mit nur vier Anschlüssen für das Kühlmittel und einer minimalen Zahl von Ventilen sehr kompakt bereit.

Im Folgenden wird der Kühlbetrieb des Heiz-/Kühl-Moduls 68 näher erläutert:
Das Flüssigkeits-Kühlmittel strömt durch den ersten Eingang 70 zu dem Kühlmittel-Eingang des Gaskühlers 7. Es durchströmt diesen in Richtung des Pfeils 17 und gelangt zu dessen Kühlmittel-Ausgang. Von diesem gelangt es zu dem mit K gekennzeichneten Eingang des Umschaltventils 83, der mit dem nicht gekennzeichneten Ausgang verbunden ist. Das Kühlmittel strömt durch das Ventil 83, weil das Ventilstellglied 97 im Kühlbetrieb gesperrt ist. Von dem nicht gekennzeichneten Ausgang des Ventils 83 gelangt das Kühlmittel zum Verdichter 3, den es durchströmt, und von dem es zu dem nicht gekennzeichneten Eingang des Umschaltventils 85 gelangt. Dieser ist mit dem mit K gekennzeichneten Ausgang verbunden, so dass das Kühlmittel von hier zum ersten Ausgang 73 gelangt. Das Ventilstellglied 97 ist gesperrt, so dass das Kühlmittel hierüber nicht zurückströmen kann. Ebenso sind die Ein- beziehungsweise Ausgänge der Umschaltventile 83, 85, die mit H gekennzeichnet sind, gesperrt.

Der erste Teil-Flüssigkeits-Kühlmittel-Kreislauf 77 umfasst im Kühlbetrieb also den Gaskühler 7 und den Verdichter 3. Es zeigt sich, dass dann durch die Ventileinrichtung 81 der Verdichter 3 mit seinem Kühlmittel-Eingang mit dem Kühlmittel-Ausgang des Gaskühlers 7 und mit seinem Kühlmittel-Ausgang mit dem ersten Ausgang 73 verbunden ist.

Die Heiz-/Kühleinrichtung 1, welche das Heiz-/Kühl-Modul 68 umfasst, weist bevorzugt Mittel auf, welche den ersten Teil-Flüssigkeits-Kühlmittel-Kreislauf 77 im Kühlbetrieb mit dem Außenluft-Wärmetauscher 27 verbinden. In diesem Fall ist der erste Teil-Flüssigkeits-Kühlmittel-Kreislauf 77 demnach dem zweiten Flüssigkeits-Kühlmittel-Kreislauf 23 gemäß Figur 2 zugeordnet.

Damit wird die Abwärme des Verdichters 3 sowie die im Gaskühler 7 von dem Flüssigkeits-Kühlmittel aufgenommene Wärme über den Außenluft-Wärmetauscher 27 abgegeben.

Das durch den zweiten Eingang 71 in das Heiz-/Kühl-Modul 68 einströmende Kühlmittel kann nicht durch das Umschaltventil 83 fließen, weil dessen mit H gekennzeichneter Eingang gesperrt ist. Das Ventilstellglied 95 ist im Kühlbetrieb auf Durchlass geschaltet, so dass das Kühlmittel vom zweiten Eingang 71 über dieses zum Kühlmittel-Eingang des Verdampfers 9 strömt. Es kann nicht über das Umschaltventil 85 strömen, weil dessen Eingang H gesperrt ist. Es durchströmt den Verdampfer 9 entlang des Pfeils 17' und gelangt über dessen Kühlmittel-Ausgang zum zweiten Ausgang 75.

Der zweite Teil-Flüssigkeits-Kühlmittel-Kreislauf 79 umfasst im Kühlbetrieb also den Verdampfer 9. Zugleich wird deutlich, dass durch die Ventileinrichtung 81, hier konkret durch die Ventilvorrichtung 91, im Kühlbetrieb der zweite Eingang 71 mit dem Kühlmittel-Eingang des Verdampfers 9 verbunden ist.

Die Heiz-/Kühleinrichtung 1, welche das Heiz-/Kühl-Modul 68 umfasst, weist bevorzugt Mittel auf, welche im Kühlbetrieb den zweiten Teil-Flüssigkeits-Kühlmittel-Kreislauf 79 mit dem Innenraum-Wärmetauscher 19 verbinden. Damit ist im Kühlbetrieb der zweite Teil-Flüssigkeits-Kühlmittel-Kreislauf 79 dem ersten Flüssigkeits-Kühlmittel-Kreislauf 13 gemäß Figur 2 zugeordnet.

Insgesamt zeigt sich demnach, dass mit Hilfe des Heiz-/Kühl-Moduls 68 im Kühlbetrieb die in Figur 2 dargestellte Funktionalität der Heiz-/Kühleinrichtung 1 verwirklicht wird.

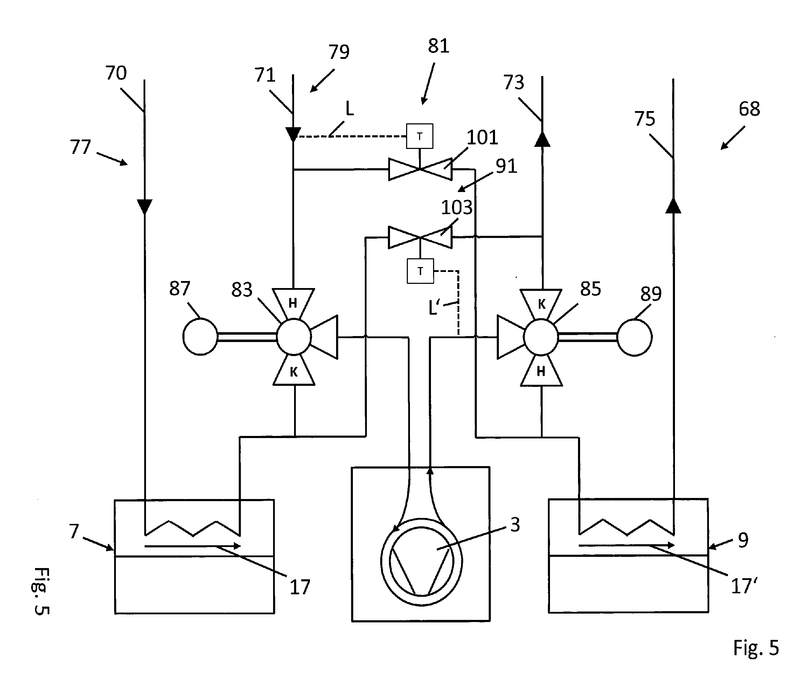

Figur 5 zeigt ein zweites Ausführungsbeispiels des Heiz-/Kühl-Moduls 68. Gleiche und funktionsgleiche Elemente sind mit gleichen Bezugszeichen versehen, so dass insofern auf die vorangegangene Beschreibung verwiesen wird. Die Funktionalität und die Zuordnung der Kühlmittelströme im Heiz- beziehungsweise Kühlbetrieb des in Figur 5 dargestellten Ausführungsbeispiels entspricht vollständig derjenigen des Ausführungsbeispiels gemäß Figur 4. Es wird insofern auf die vorangegangene Darstellung verwiesen.

Die Ventilvorrichtung 91 ist hier jedoch anders ausgebildet: Sie umfasst zwei temperaturgesteuerte Ventile 101, 103. Diese umfassen vorzugsweise eine Bimetall-Steuerung beziehungsweise Bimetall-Stellvorrichtung. Über eine gestrichelte Linie L ist angedeutet, dass das temperaturgesteuerte Ventil 101 die Temperatur des Kühlmittels erfasst, welches durch den zweiten Eingang 71 in das Heiz-/Kühl-Modul 68 einströmt. Es ist bei niedriger Temperatur geschlossen und öffnet bei einem bevorzugten Ausführungsbeispiel, wenn das Kühlmittel am Messort, also im Bereich des zweiten Eingangs 71 eine Temperatur größer 15 °C aufweist. Bevorzugt weist das temperaturgesteuerte Ventil 101 eine Schalthysterese von besonders bevorzugt ungefähr 3 bis 5 K auf. Nachdem es durch Temperaturanstieg auf über 15 °C geöffnet wurde, schließt es also vorzugsweise, wenn die Temperatur am Messort auf ungefähr 10 bis 12 °C oder darunter sinkt.

Durch eine gestrichelte Linie L' ist angedeutet, dass das Ventil 103 die Temperatur des Kühlmittels im Bereich des Kühlmittel-Ausgangs des Verdichters 3 erfasst. Es ist geöffnet, wenn das Kühlmittel vergleichsweise kalt ist, und schließt bei einem bevorzugten Ausführungsbeispiel bei einer Temperatur des Kühlmittels am Messort von größer 50 °C. Bevorzugt weist auch das Ventil 103 eine Schalthysterese von besonders bevorzugt ungefähr 3 bis 5 K auf. Nachdem es durch Temperaturanstieg auf über 50 °C geschlossen wurde, öffnet es also vorzugsweise wieder, wenn die Temperatur am Messort auf ungefähr 45 bis 47 °C oder darunter sinkt.

### Bezüglich des Ventils 101 zeigt sich Folgendes:

Im Heizbetrieb gelangt das vom Verdampfer 9 durch den zweiten Ausgang 75 strömende Kühlmittel peripherieseitig zum Außenluft-Wärmetauscher 27. Von dort gelangt es zum zweiten Eingang 71, wo es eine Temperatur aufweist, bei der das Ventil 101 geschlossen ist. Dementsprechend strömt es - wie bereits erläutert - zum Eingang H des Umschaltventils 83 und passiert nicht das Ventil 101.

Im Kühlbetrieb strömt das Kühlmittel peripherieseitig durch den Innenraum-Wärmetauscher 19, wo es vergleichsweise viel Wärme aufnimmt. Von dort gelangt es mit einer Temperatur zum zweiten Eingang 71, bei welcher das Ventil 101 geöffnet ist. Da der mit H gekennzeichnete Eingang des Umschaltventils 83 gesperrt ist, durchströmt das Kühlmittel das Ventil 101 und gelangt so zum Kühlmittel-Eingang des Verdampfers 9.

### Bezüglich des Ventils 103 zeigt sich Folgendes:

Das im Heizbetrieb peripherieseitig vom Außenluft-Wärmetauscher 27 zum zweiten Eingang 71 strömende Kühlmittel ist vergleichsweise kalt, und strömt über das Umschaltventil 83 zum Verdichter 3. Da es dort vergleichsweise kalt ankommt, hat es auch an dessen Kühlmittel-Ausgang, also nachdem es die Abwärme des Verdichters 3 aufgenommen hat, eine Temperatur, bei welcher das Ventil 103 geöffnet ist. Das vom Gaskühler 7 kommende Kühlmittel kann also durch das Ventil 103 strömen und so zum ersten Ausgang 73 gelangen.

Im Kühlbetrieb wird dem Verdichter 3 über das Umschaltventil 83 Kühlmittel zugeführt, welches zuvor den Gaskühler 7 passiert hat. Dieses hat hier bereits Wärme aufgenommen und ist daher relativ warm. Beim Durchströmen des Verdichters 3 nimmt es noch dessen Abwärme auf, so dass es an dessen Kühlmittel-Ausgang eine Temperatur aufweist, bei welcher das Ventil 103 geschlossen ist. Daher kann das vom Gaskühler 7 kommende Kühlmittel nicht durch das Ventil 103 zum ersten Ausgang 73 strömen.

Die Ventilvorrichtung 91 mit den temperaturgesteuerten Ventilen 101, 103 verwirklicht demnach die gleiche Funktionalität wie die Ventilvorrichtung 91 gemäß Figur 4, welche das Motorventil 93 aufweist. Bei dem Ausführungsbeispiel gemäß Figur 5 ist jedoch keine externe Steuerungslogik erforderlich, um die Ventile 101, 103 zu steuern. Stattdessen regeln diese ihren Öffnungs- beziehungsweise Schließzustand selbst aufgrund der an den Messorten herrschenden Temperatur des Kühlmittels. Daher ist dieses Ausführungsbeispiel des Heiz-/Kühl-Moduls 68 einfacher aufgebaut.

Es zeigt sich noch Folgendes: Die Heiz-/Kühleinrichtung 1, welche das Heiz-/Kühl-Modul 68 umfasst, weist bevorzugt mindestens eine Ventileinrichtung in der Peripherie auf. Durch diese ist im Kühlbetrieb bevorzugt der erste Eingang 70 mit einem Kühlmittel-Ausgang des Außenluft-Wärmetauschers 27 und der erste Ausgang 73 mit dessen Kühlmittel-Eingang verbindbar. Hierdurch kann der zweite Kühlmittel-Kreislauf 23 gemäß Figur 2 realisiert werden. Zugleich ist bevorzugt der zweite Eingang 71 mit einem Kühlmittel-Ausgang des Innenraum-Wärmetauschers 19, sowie der zweite Ausgang 75 mit dessen Kühlmittel-Eingang verbindbar, so dass der erste Kühlmittel-Kreislauf 13 gemäß Figur 2 realisiert wird.

Im Heizbetrieb ist durch die Ventileinrichtung bevorzugt der erste Eingang 70 des Heiz-/Kühl-Moduls 68 mit einem Kühlmittel-Ausgang des Innenraum-Wärmetauschers 19 und der erste Ausgang 73 mit dessen Kühlmittel-Eingang verbindbar, um den ersten Kühlmittel-Kreislauf 13 gemäß Figur 1 zu realisieren. Zugleich sind der zweite Eingang 71 mit einem Kühlmittel-Ausgang des Außenluft-Wärmetauschers 27 und der zweite Ausgang 75 mit dessen Kühlmittel-Eingang verbindbar, um den zweiten Kühlmittel-Kreislauf 23 gemäß Figur 1 zu realisieren.

Letztlich wird also durch die mindestens eine Ventileinrichtung sichergestellt, dass die Funktionalität der Heiz-/Kühleinrichtung 1, die in Zusammenhang mit den Figuren 1 bis 3 beschrieben wurde, auch unter Einbeziehung des Heiz-/Kühl-Moduls 68 verwirklicht ist.

Bei der Peripherie handelt es sich bevorzugt um die eines Fahrzeugs. Diese umfasst vorzugsweise auch die Pumpen 15, 25 und gegebenenfalls das Mischventil 65 und die Pumpe 67.

Die Heiz-/Kühleinrichtung 1 ist insbesondere deswegen vorteilhaft, weil im Heizbetrieb nicht nur Abwärme des Verdichters, sondern auch über den Außenluft-Wärmetauscher aufgenommene Wärme, die über den zweiten Kühlmittel-Kreislauf 23 dem Verdampfer 9 zugeführt wird, über den Kältemittel-Kreislauf dem Gaskühler 7 und damit letztlich dem ersten Kühlmittel-Kreislauf 13 zur Verfügung gestellt wird. Es wird damit eine Wärmepumpe realisiert, welche den Außenluft-Wärmetauscher 27 als Wärmequelle und den Innenraum-Wärmetauscher 19 als Wärmesenke umfasst.

Der Grundgedanke der vorliegenden Erfindung ist nicht ausschließlich in der Fahrzeugtechnik anwendbar. Er ist genauso auch für die Klimatisierung, Heizung beziehungsweise Temperatursteuerung ganz allgemein von Innenräumen, insbesondere auch von Büro- oder Wohnräumen einsetzbar.

Ist die Peripherie allerdings die eines Fahrzeugs, so sind bevorzugt peripherieseitig auch die Batterie und/oder der Akkumulator und insbesondere ein Elektromotor eines Elektrofahrzeugs in die Kreisläufe einbeziehbar. So ist es möglich, die Batterie und/oder den Akkumulator eines Elektrofahrzeugs stets bei einer geeigneten Temperatur zu halten, insbesondere wenn Kühlmittel aus den beiden Kreisläufen 13, 23 hierfür gemischt werden kann. Der Elektromotor des Fahrzeugs kann je nach Betriebszustand als Wärmequelle oder gegebenenfalls als Wärmesenke zugeschaltet werden.

Insgesamt zeigt sich damit, dass die Heiz-/Kühleinrichtung 1 sehr flexibel einsetzbar ist. Das Heiz-/Kühl-Modul 68 ist sehr kompakt, weist eine nur geringe Anzahl von Ventilen auf und ist mit nur vier Anschlüssen auf einfache Weise in eine Peripherie, vorzugsweise eine Fahrzeugperipherie integrierbar.

### Bezugszeichenliste

- 1: Heiz-/Kühleinrichtung
- 3: Verdichter
- 5: Kältemittelkreislauf
- 7: Gaskühler
- 9: Verdampfer
- 11: Leitung
- 13: erster Flüssigkeits-Kühlmittel-Kreislauf
- 15: Pumpe
- 17: Pfeil
- 17': Pfeil
- 19: Innenraum-Wärmetauscher
- 21: Ventilator
- 23: zweiter Flüssigkeits-Kühlmittel-Kreislauf
- 25: Pumpe
- 27: Außenluft-Wärmetauscher
- 29: Ventilator
- 31: Leitung
- 33: Leitung
- 35: Leitung
- 37: Expansionsventil
- 39: Leitung
- 41: Speicher
- 43: interner Wärmetauscher
- 45: Pfeil
- 47: Umschaltventil
- 49: Umschaltventil
- 51: Umschaltventil
- 53: Umschaltventil
- 55: Leitung
- 57: Rückschlagventil
- 59: Tank
- 61: Tank
- 63: Rückschlagventil
- 65: Mischventil
- 67: Pumpe
- 68: Heiz-/Kühl-Modul
- 69: Akkumulator
- 70: Eingang
- 71: Eingang
- 73: Ausgang
- 75: Ausgang
- 77: Teil-Flüssigkeits-Kühlmittel-Kreislauf
- 79: Teil-Flüssigkeits-Kühlmittel-Kreislauf
- 81: Ventileinrichtung
- 83: Umschaltventil
- 85: Umschaltventil
- 87: Motor
- 89: Motor
- 91: Ventilvorrichtung
- 93: Motorventil
- 95: Ventilstellglied
- 97: Ventilstellglied
- 99: Motor
- 101: Ventil
- 103: Ventil
- a: Knotenpunkt
- b: Knotenpunkt
- c: Knotenpunkt
- d: Knotenpunkt
- e: Knotenpunkt
- f: Knotenpunkt
- g: Knotenpunkt

- KüMB: Kühlmittelblock
- KäMB: Kältemittelblock

## Patentansprüche

1. Heiz-/Kühleinrichtung (1) für Fahrzeuge, insbesondere Kraftfahrzeuge, mit einem Verdichter (3), einem Kältemittel-Kreislauf (5), einem Gaskühler (7), einem Verdampfer (9) und mit einem zwischen Gaskühler (7) und Verdampfer (9) im Kältemittel-Kreislauf (5) angeordneten Expansionsventil (37), wobei
- der Gaskühler (7) oder der Verdampfer (9) mit einem Flüssigkeits-Kühlmittel-Kreislauf (13,23) gekoppelt ist, der mit einem Innenraum-Wärmetauscher (19) oder einem Außenluft-Wärmetauscher (27) zusammenwirkt oder dass
- der Gaskühler (7) und der Verdampfer (9) mit je einem eigenen Flüssigkeits-Kühlmittel-Kreislauf (13,23) gekoppelt sind, wobei
- einer der Flüssigkeits-Kühlmittel-Kreisläufe (13,23) mit dem Innenraum-Wärmetauscher (19) und der andere Flüssigkeits-Kühlmittel-Kreislauf (23,13) mit dem Außenluft-Wärmetauscher (27) zusammenwirken, wobei
- wenn der Gaskühler (7) und der Verdampfer (9) einen eigenen Flüssigkeits-Kühlmittel-Kreislauf (13,23) umfassen,
- in einem Heizbetrieb der Flüssigkeits-Kühlmittel-Kreislauf (13) des Gaskühlers (7) mit dem Innenraum-Wärmetauscher (19) und der Flüssigkeits-Kühlmittel-Kreislauf (23) des Verdampfers (9) mit dem Außenluft-Wärmetauscher (27) zusammenwirken, und dass
- in einem Kühlbetrieb der Flüssigkeits-Kühlmittel-Kreislauf (23) des Gaskühlers (7) mit dem Außenluft-Wärmetauscher (27) und der Flüssigkeits-Kühlmittel-Kreislauf des Verdampfers (9) mit dem Innenraum-Wärmetauscher (19) zusammenwirken
**dadurch gekennzeichnet, dass**
- der Verdichter (3) in den Flüssigkeits-Kühlmittel-Kreislauf (23), der mit dem Außenluft-Wärmetauscher (27) zusammenwirkt, einbezogen ist, sodass dessen Betriebswärme abführbar ist.

2. Heiz-/Kühleinrichtung nach Anspruch 1, **dadurch gekennzeichnet, dass** der Kältemittel-Kreislauf (5) einen internen Wärmetauscher (43) umfasst, der Wärme aus dem vom Gaskühler (7) zum Expansionsventil (37) strömenden Kältemittel auf das vom Verdampfer (9) zum Verdichter (3) strömende Kältemittel überträgt.

3. Heiz-/Kühleinrichtung nach Anspruch 1 oder 2, **dadurch gekennzeichnet, dass** dem Kältemittel-Kreislauf (5) ein Speicher (41) integriert ist.

4. Heiz-/Kühleinrichtung nach Anspruch 1, **dadurch gekennzeichnet, dass**
- der Flüssigkeits-Kühlmittel-Kreislauf (13,23) des Gaskühlers (7) mit mindestens zwei Umschaltventilen (47,49,51,53) zusammenwirkt, welche das Flüssigkeits-Kühlmittel je nach Betriebsart dem Innenraum-Wärmetauscher (19) oder dem Außenluft-Wärmetauscher (27) zuführen, und dass
- der Flüssigkeits-Kühlmittel-Kreislauf des Verdampfers (9) mit mindestens zwei Umschaltventilen (47,49,51,53) zusammenwirkt, welche das Flüssigkeits-Kühlmittel je nach Betriebsart dem Außenluft-Wärmetauscher (27) oder dem Innenraum-Wärmetauscher (19) zuführt.

5. Heiz-/Kühleinrichtung nach einem der vorhergehenden Ansprüche 1 und 4, **dadurch gekennzeichnet, dass** zwischen dem Flüssigkeits-Kühlmittel-Kreislauf (13) des Gaskühlers (7) und dem Flüssigkeits-Kühlmittel-Kreislauf (23) des Verdampfers (9) ein Ventil (63) vorgesehen ist, über das aus dem Flüssigkeits-Kühlmittel-Kreislauf (13) des Gaskühlers (7) im Heizbetrieb Wärme in den Verdampfer (9) einbringbar ist.

6. Heiz-/Kühleinrichtung nach Anspruch 5, **dadurch gekennzeichnet, dass** das Ventil (63) als Rückschlagventil, elektrisch angesteuertes Ventil oder als thermostatisch angesteuertes Ventil ausgebildet ist.

7. Heiz-/Kühleinrichtung nach einem der vorhergehenden Ansprüche 1 und 4 bis 6, **dadurch gekennzeichnet, dass** zwischen dem Flüssigkeits-Kühlmittel-Kreislauf (13,23) des Gaskühlers (7) und dem Flüssigkeits-Kühlmittel-Kreislauf (23,13) des Verdampfers (9) ein Mischventil (65) vorgesehen ist, welchem warmes Flüssigkeits-Kühlmittel aus einem der beiden Flüssigkeits-Kühlmittel-Kreisläufe (13,23) und/oder kaltes Flüssigkeits-Kühlmittel aus dem anderen Flüssigkeits-Kühlmittel-Kreislauf (23,13) zugeführt wird, sodass aus dem Mischventil (65) temperiertes Flüssigkeits-Kühlmittel für einen Verbraucher, vorzugsweise einen Akkumulator (69), zur Verfügung steht.

8. Heiz-/Kühleinrichtung nach einem der vorhergehenden Ansprüche 1 und 4 bis 7, **dadurch gekennzeichnet, dass** die mindestens zwei Umschaltventile (47, 49, 51, 53) und die Pumpen (15, 25) als Baueinheit zu einem Kühlmittelblock (KüMB) zusammenfassbar sind.

9. Heiz-/Kühleinrichtung nach einem der vorhergehenden Ansprüche 1 und 4 bis 8, **dadurch gekennzeichnet, dass** der Verdichter (3), der Gaskühler (7) und der Verdampfer (9) als Baueinheit zu einem Kältemittelblock (KäMB) zusammenfassbar sind.

10. Heiz-/Kühleinrichtung nach Anspruch 9, **dadurch gekennzeichnet, dass** der Kühlmittelblock (KüMB) und der Kältemittelblock (KäMB) zu einer einzigen Gesamt-Baueinheit zusammenfassbar sind.

11. Heiz-/Kühl-Modul für eine Heiz-/Kühleinrichtung nach einem der Ansprüche 1 bis 10, mit
- einem ersten Eingang (70), der mit dem Kühlmittel-Eingang eines Gaskühlers (7) in Fluidverbindung steht;
- einem ersten Ausgang (73), wobei
- der erste Eingang (70) mit dem ersten Ausgang (73) in Fluidverbindung steht, so dass ein erster Teil-Flüssigkeits-Kühlmittel-Kreislauf (77) gebildet wird, und mit
- einem zweiten Eingang (71), sowie
- einem zweiten Ausgang (75), der mit dem Kühlmittel-Ausgang eines Verdampfers (9) in Fluidverbindung steht, wobei
- der zweite Eingang (71) mit dem zweiten Ausgang (75) in Fluidverbindung steht, so dass ein zweiter Teil-Flüssigkeits-Kühlmittel-Kreislauf (79) gebildet wird, und außerdem mit
- einem Verdichter (3),
**gekennzeichnet durch** eine Ventileinrichtung (81), **durch** welche der Verdichter (3) wahlweise dem ersten (77) oder dem zweiten Teil-Flüssigkeits-Kühlmittel-Kreislauf (79) zuordenbar ist.

12. Heiz-/Kühl-Modul nach Anspruch 11, **dadurch gekennzeichent,** dass durch die Ventileinrichtung (81) der Verdichter (3) wahlweise mit
- seinem Kühlmittel-Eingang mit dem zweiten Eingang (71) und mit seinem Kühlmittel-Ausgang mit dem Kühlmittel-Eingang des Verdampfers (9) oder
- mit seinem Kühlmittel-Eingang mit dem Kühlmittel-Ausgang des Gaskühlers (7) und mit seinem Kühlmittel-Ausgang mit dem ersten Ausgang (73) verbindbar ist.

13. Heiz-/Kühl-Modul nach Anspruch 11 oder 12, **dadurch gekennzeichnet, dass** durch die Ventileinrichtung (81) wahlweise
- der Kühlmittel-Ausgang des Gaskühlers (7) mit dem ersten Ausgang (73), oder
- der zweite Eingang (71) mit dem Kühlmittel-Eingang des Verdampfers (9) verbindbar ist.

14. Heiz-/Kühl-Modul nach einem der vorhergehenden Ansprüche 11 bis 13, **dadurch gekennzeichnet, dass** die Ventileinrichtung (81) zwei vorzugsweise motorgesteuerte Umschaltventile (83,85) umfasst, durch welche vorzugsweise der Kühlmittel-Eingang des Verdichters (3) mit dem zweiten Eingang (71) oder mit dem Kühlmittel-Ausgang des Gaskühlers (7), und der Kühlmittel-Ausgang des Verdichters (3) mit dem Kühlmittel-Eingang des Verdampfers (9) oder mit dem ersten Ausgang (73) verbindbar ist.

15. Heiz-/Kühl-Modul nach einem der vorhergehenden Ansprüche 11 bis 14, **dadurch gekennzeichnet, dass** die Ventileinrichtung (81) eine Ventilvorrichtung (91) umfasst, durch welche vorzugsweise der zweite Eingang (71) mit dem Kühlmittel-Eingang des Verdampfers (9) oder der Kühlmittel-Ausgang des Gaskühlers (7) mit dem ersten Ausgang (73) verbindbar ist.

16. Heiz-/Kühl-Modul nach Anspruch 17, **dadurch gekennzeichnet, dass** die Ventilvorrichtung (91) als Motorventil (93) mit zwei gegensinnig verstellbaren Ventilstellgliedern (95,97) ausgebildet ist.

17. Heiz-/Kühl-Modul nach Anspruch 15, **dadurch gekennzeichnet, dass** die Ventilvorrichtung (91) zwei temperaturgesteuerte Ventile (101,103) umfasst.

18. Heiz-/Kühleinrichtung nach einem der Ansprüche 1 bis 10, **gekennzeichnet durch** ein Heiz-/Kühl-Modul (68) nach einem der Ansprüche 11 bis 17.

19. Heiz-/Kühleinrichtung nach Anspruch 18, **gekennzeichnet durch** mindestens eine Ventileinrichtung, **durch** welche
- der erste Eingang (70) des Heiz-/Kühl-Moduls mit einem Kühlmittel-Ausgang des Außenluft-Wärmetauschers (27) oder des Innenraum-Wärmetauschers (19),
- der zweite Eingang (71) mit einem Kühlmittel-Ausgang des Innenraum-Wärmetauschers (19) oder des Außenluft-Wärmetauschers (27),
- der erste Ausgang (73) mit einem Kühlmittel-Eingang des Außenluft-Wärmetauschers (27) oder des Innenraum-Wärmetauschers (19), und
- der zweite Ausgang (75) mit einem Kühlmittel-Eingang des Innenraum-Wärmtauschers (19) oder des Außenluft-Wärmetauschers (27) verbindbar ist.

## Claims

1. Heating/cooling device (1) for vehicles, in particular motor vehicles, having a compressor (3), having a refrigerant circuit (5), having a gas cooler (7), having an evaporator (9) and having an expansion valve (37) which is arranged between gas cooler (7) and evaporator (9) in the refrigerant circuit (5), wherein
- the gas cooler (7) or the evaporator (9) is coupled to a liquid-coolant circuit (13, 23) which interacts with an interior-compartment heat exchanger (19) or with an outside-air heat exchanger (27), or wherein
- the gas cooler (7) and the evaporator (9) are each coupled to a dedicated liquid-coolant circuit (13, 23), wherein
- one of the liquid-coolant circuits (13, 23) interacts with the interior-compartment heat exchanger (19) and the other liquid-coolant circuit (23, 13) interacts with the outside-air heat exchanger (27), wherein,
- if the gas cooler (7) and the evaporator (9) comprise a dedicated liquid-coolant circuit (13, 23),
- in a heating mode, the liquid-coolant circuit (13) of the gas cooler (7) interacts with the interior-compartment heat exchanger (19) and the liquid-coolant circuit (23) of the evaporator (9) interacts with the outside-air heat exchanger (27), and wherein
- in a cooling mode, the liquid-coolant circuit (23) of the gas cooler (7) interacts with the outside-air heat exchanger (27) and the liquid-coolant circuit of the evaporator (9) interacts with the interior-compartment heat exchanger (19),
**characterized in that**
- the compressor (3) is incorporated into the liquid-coolant circuit (23) which interacts with the outside-air heat exchanger (27), such that the heat of operation of said compressor can be dissipated.

2. Heating/cooling device according to Claim 1, **characterized in that** the refrigerant circuit (5) comprises an internal heat exchanger (43) by means of which heat from the refrigerant flowing from the gas cooler (7) to the expansion valve (37) is transferred to the refrigerant flowing from the evaporator (9) to the compressor (3).

3. Heating/cooling device according to Claim 1 or 2, **characterized in that** an accumulator (41) is integrated into the refrigerant circuit (5).

4. Heating/cooling device according to Claim 1, **characterized in that**
- the liquid-coolant circuit (13, 23) of the gas cooler (7) interacts with at least two switching valves (47, 49, 51, 53) which, depending on the operating mode, supply the liquid coolant to the interior-compartment heat exchanger (19) or to the outside-air heat exchanger (27), and **in that**
- the liquid-coolant circuit of the evaporator (9) interacts with at least two switching valves (47, 49, 51, 53) which, depending on the operating mode, supply the liquid coolant to the outside-air heat exchanger (27) or to the interior-compartment heat exchanger (19).

5. Heating/cooling device according to one of the preceding Claims 1 and 4, **characterized in that**, between the liquid-coolant circuit (13) of the gas cooler (7) and the liquid-coolant circuit (23) of the evaporator (9), there is provided a valve (63) by means of which, in the heating mode, heat from the liquid-coolant circuit (13) of the gas cooler (7) can be introduced into the evaporator (9).

6. Heating/cooling device according to Claim 5, **characterized in that** the valve (63) is in the form of a check valve, an electrically actuated valve or a thermostatically actuated valve.

7. Heating/cooling device according to one of the preceding Claims 1 and 4 to 6, **characterized in that**, between the liquid-coolant circuit (13, 23) of the gas cooler (7) and the liquid-coolant circuit (23, 13) of the evaporator (9), there is provided a mixing valve (65) to which warm liquid coolant from one of the two liquid-coolant circuits (13, 23) and/or cold liquid coolant from the other liquid-coolant circuit (23, 13) is supplied, such that the mixing valve (65) outputs temperature-controlled liquid coolant for a consumer, preferably a battery (69).

8. Heating/cooling device according to one of the preceding Claims 1 and 4 to 7, **characterized in that** the at least two switching valves (47, 49, 51, 53) and the pumps (15, 25) can be combined, as a structural unit, to form a coolant block (KüMB).

9. Heating/cooling device according to one of the preceding Claims 1 and 4 to 8, **characterized in that** the compressor (3), the gas cooler (7) and the evaporator (9) can be combined, as a structural unit, to form a refrigerant block (KäMB).

10. Heating/cooling device according to Claim 9, **characterized in that** the coolant block (KüMB) and the refrigerant block (KäMB) can be combined to form a single overall structural unit.

11. Heating/cooling module for a heating/cooling device according to one of Claims 1 to 10, having
- a first inlet (70) which is fluidically connected to the coolant inlet of a gas cooler (7);
- a first outlet (73), wherein
- the first inlet (70) is fluidically connected to the first outlet (73) such that a first partial liquid-coolant circuit (77) is formed, and having
- a second inlet (71), and
- a second outlet (75) which is fluidically connected to the coolant outlet of an evaporator (9), wherein
- the second inlet (71) is fluidically connected to the second outlet (75) such that a second partial liquid-coolant circuit (79) is formed, and furthermore having
- a compressor (3),
**characterized by** a valve device (81) by means of which the compressor (3) can be assigned selectively to the first (77) or to the second partial liquid-coolant circuit (79).

12. Heating/cooling module according to Claim 11, **characterized in that**, by means of the valve device (81), the compressor (3) can be selectively connected
- by way of its coolant inlet to the second inlet (71) and by way of its coolant outlet to the coolant inlet of the evaporator (9), or
- by way of its coolant inlet to the coolant outlet of the gas cooler (7) and by way of its coolant outlet to the first outlet (73).

13. Heating/cooling module according to Claim 11 or 12, **characterized in that**, by means of the valve device (81), it is selectively possible for
- the coolant outlet of the gas cooler (7) to be connected to the first outlet (73), or
- for the second inlet (71) to be connected to the coolant inlet of the evaporator (9).

14. Heating/cooling module according to one of the preceding Claims 11 to 13, **characterized in that** the valve device (81) comprises two preferably motor-controlled switching valves (83, 85) by means of which, preferably, the coolant inlet of the compressor (3) can be connected to the second inlet (71) or to the coolant outlet of the gas cooler (7) and the coolant outlet of the compressor (3) can be connected to the coolant inlet of the evaporator (9) or to the first outlet (73).

15. Heating/cooling module according to one of the preceding Claims 11 to 14, **characterized in that** the valve device (81) comprises a valve apparatus (91) by means of which, preferably, the second inlet (71) can be connected to the coolant inlet of the evaporator (9) or the coolant outlet of the gas cooler (7) can be connected to the first outlet (73).

16. Heating/cooling module according to Claim 17, **characterized in that** the valve apparatus (91) is in the form of a motor-operated valve (93) with two oppositely adjustable valve control elements (95, 97).

17. Heating/cooling module according to Claim 15, **characterized in that** the valve apparatus (91) comprises two temperature-controlled valves (101, 103).

18. Heating/cooling device according to one of Claims 1 to 10, **characterized by** a heating/cooling module (68) according to one of Claims 11 to 17.

19. Heating/cooling device according to Claim 18, **characterized by** at least one valve device, by means of which
- the first inlet (70) of the heating/cooling module can be connected to a coolant outlet of the outside-air heat exchanger (27) or of the interior-compartment heat exchanger (19),
- the second inlet (71) can be connected to a coolant outlet of the interior-compartment heat exchanger (19) or of the outside-air heat exchanger (27),
- the first outlet (73) can be connected to a coolant inlet of the outside-air heat exchanger (27) or of the interior-compartment heat exchanger (19), and
- the second outlet (75) can be connected to a coolant inlet of the interior-compartment heat exchanger (19) or of the outside-air heat exchanger (27).

## Revendications

1. Dispositif de chauffage et de refroidissement (1) pour véhicules, en particulier véhicules automobiles, avec un compresseur (3), un circuit de frigorigène (5), un refroidisseur de gaz (7), un évaporateur (9) et avec un détendeur thermostatique (37) disposé entre le refroidisseur de gaz (7) et l'évaporateur (9) dans le circuit de frigorigène (5), dans lequel
- le refroidisseur de gaz (7) ou l'évaporateur (9) est couplé avec un circuit de refroidissement par fluide (13, 23) qui coopère avec un échangeur thermique d'habitacle (19) ou un échangeur thermique d'air extérieur (27) ou
- le refroidisseur de gaz (7) et l'évaporateur (9) sont chacun couplés à un circuit de refroidissement par fluide (13, 23) dans lequel
- un des circuits de refroidissement par fluide (13, 23) coopère avec l'échangeur thermique d'habitacle (19) et l'autre circuit de refroidissement par fluide (23, 13) coopère avec l'échangeur thermique d'air extérieur (27), dans lequel
- si le refroidisseur de gaz (7) et l'évaporateur (9) comprennent un circuit de refroidissement par fluide propre (13, 23),
- dans un fonctionnement de chauffage, le circuit de refroidissement par fluide (13) du refroidisseur de gaz (7) coopère avec l'échangeur thermique d'habitacle (19) et le circuit de refroidissement par fluide (23) de l'évaporateur (9) avec l'échangeur thermique d'air extérieur (27) dans lequel
- dans un fonctionnement de réfrigération, le circuit de refroidissement par fluide (23) du refroidisseur de gaz (7) coopère avec l'échangeur thermique d'air extérieur (27) et le circuit de refroidissement par fluide de l'évaporateur (9) avec l'échangeur thermique d'habitacle (19)
**caractérisé en ce que**
- le compresseur (3) est intégré dans le circuit de refroidissement par fluide (23), qui coopère avec l'échangeur thermique d'air extérieur (27), de telle sorte que la chaleur de fonctionnement de celui-ci peut être éliminée.

2. Dispositif de chauffage et de refroidissement selon la revendication 1 **caractérisé en ce que** le circuit de frigorigène (5) comprend un échangeur thermique interne (43) qui transmet de la chaleur du frigorigène s'écoulant du refroidisseur de gaz (7) au détendeur thermostatique (37) au frigorigène s'écoulant de l'évaporateur (9) au compresseur (3).

3. Dispositif de chauffage et de refroidissement selon la revendication 1 ou 2 **caractérisé en ce qu'**un réservoir (41) est intégré au circuit de frigorigène (5).

4. Dispositif de chauffage et de refroidissement selon la revendication 1 **caractérisé en ce que**
- le circuit de refroidissement par fluide (13, 23) du refroidisseur de gaz (7) coopère avec au moins deux électrovannes de commutation (47, 49, 51, 53), lesquelles acheminent le réfrigérant liquide en fonction du type de fonctionnement à l'échangeur thermique d'habitacle (19) ou à l'échangeur thermique d'air extérieur (27) et **en ce que**
- le circuit de refroidissement par fluide de l'évaporateur (9) coopère avec au moins deux électrovannes de commutation (47, 49, 51, 53), lesquelles acheminent le réfrigérant liquide en fonction du type de fonctionnement à l'échangeur thermique d'air extérieur (27) ou à l'échangeur thermique d'habitacle (19).

5. Dispositif de chauffage et de refroidissement selon l'une quelconque des revendications précédentes 1 et 4 **caractérisé en ce qu'**entre le circuit de refroidissement par fluide (13) du refroidisseur de gaz (7) et le circuit de refroidissement par fluide (23) de l'évaporateur (9) une soupape (63) est prévue par l'intermédiaire de laquelle en fonctionnement de chauffage de la chaleur peut être introduite dans l'évaporateur (9) à partir du circuit de refroidissement par fluide (13) du refroidisseur de gaz (7).

6. Dispositif de chauffage et de refroidissement selon la revendication 5 **caractérisé en ce que** la soupape (63) est constituée comme un clapet anti-retour, une soupape à commande électrique ou une soupape à commande thermostatique.

7. Dispositif de chauffage et de refroidissement selon l'une quelconque des revendications précédentes 1 et 4 à 6 **caractérisé en ce qu'**entre le circuit de refroidissement par fluide (13, 23) du refroidisseur de gaz (7) et le circuit de refroidissement par fluide (23, 13) de l'évaporateur (9) une vanne de mélange (65) est prévue à laquelle est acheminé du réfrigérant liquide chaud à partir d'un des deux circuits de refroidissement par fluide (13, 23) et/ou du frigorigène liquide froid à partir de l'autre circuit de refroidissement par fluide (23, 13) de sorte qu'à partir de la vanne de mélange (65) on dispose de réfrigérant liquide tempéré pour un consommateur, de préférence un accumulateur (69).

8. Dispositif de chauffage et de refroidissement selon l'une quelconque des revendications précédentes 1 et 4 à 7 **caractérisé en ce que** les au moins deux électrovannes de commutation (47, 49, 51, 53) et les pompes (15, 25) peuvent être assemblées en tant qu'unité modulaire à un bloc de refroidissement (KüMB).

9. Dispositif de chauffage et de refroidissement selon l'une quelconque des revendications précédentes 1 et 4 à 8 **caractérisé en ce que** le compresseur (3), le refroidisseur de gaz (7) et l'évaporateur (9) peuvent être assemblés en tant qu'unité modulaire à un bloc de frigorigène (KäMB).

10. Dispositif de chauffage et de refroidissement selon la revendication 9 **caractérisé en ce que** le bloc de refroidissement (KüMB) et le bloc de frigorigène (KäMB) peuvent être assemblés en une seule unité modulaire totale.

11. Module de chauffage et de refroidissement pour un dispositif de chauffage et de refroidissement selon l'une quelconque des revendications 1 à 10 avec
- une première entrée (70) qui est en communication de fluide avec l'entrée de fluide de refroidissement d'un refroidisseur de gaz (7),
- une première sortie (73),dans lequel
- la première entrée (70) est en communication de fluide avec la première sortie (73) de sorte qu'un premier circuit de refroidissement par fluide partiel (77) est formé, et avec
- une deuxième entrée (71), ainsi
- qu'une deuxième sortie (75), qui est en communication de fluide avec la sortie de fluide de refroidissement d'un évaporateur (9), dans lequel
- la deuxième entrée (71) est en communication de fluide avec la deuxième sortie (75) de sorte qu'un deuxième circuit de refroidissement par fluide partiel (79) est formé et en plus avec
- un compresseur (3),
**caractérisé par** un agencement de soupape (81), par l'intermédiaire duquel le compresseur (3) peut être sélectivement affecté au premier (77) ou au deuxième circuit de refroidissement par fluide (79).

12. Module de chauffage et de refroidissement selon la revendication 11 **caractérisé en ce que** par l'agencement de soupape (81), le compresseur (3) peut être sélectivement raccordé
- avec son entrée de fluide de refroidissement à la deuxième entrée (71) et avec sa sortie de fluide de refroidissement à l'entrée de fluide de refroidissement de l'évaporateur (9) ou
- avec son entrée de fluide de refroidissement à la sortie de fluide de refroidissement du refroidisseur de gaz (7) et avec sa sortie de fluide de refroidissement à la première sortie (73).

13. Module de chauffage et de refroidissement selon la revendication 11 ou 12 **caractérisé en ce que** par l'agencement de soupape (81)
- la sortie de fluide de refroidissement du refroidisseur de gaz (7) peut être sélectivement raccordée à la première sortie (73), ou
- la deuxième entrée (71) peut être sélectivement raccordée à l'entrée de fluide de refroidissement de l'évaporateur (9).

14. Module de chauffage et de refroidissement selon l'une quelconque des revendications précédentes 11 à 13 **caractérisé en ce que** l'agencement de soupape (81) comprend deux électrovannes de commutation de préférence motorisées (83, 85) par l'intermédiaire desquelles l'entrée de fluide de refroidissement du compresseur (3) peut être de préférence raccordée à la deuxième entrée (71) ou à la sortie de fluide de refroidissement du refroidisseur de gaz (7) et la sortie de fluide de refroidissement du compresseur (3) peut être de préférence raccordée à l'entrée de fluide de refroidissement de l'évaporateur (9) ou à la première sortie (73).

15. Module de chauffage et de refroidissement selon l'une quelconque des revendications précédentes 11 à 14 **caractérisé en ce que** l'agencement de soupape (81) comprend un dispositif de soupape (91) par l'intermédiaire duquel la deuxième entrée (71) peut être de préférence raccordée à l'entrée de fluide de refroidissement de l'évaporateur (9) ou par l'intermédiaire duquel la sortie de fluide de refroidissement du refroidisseur de gaz (7) peut être de préférence raccordée à la première sortie (73).

16. Module de chauffage et de refroidissement selon la revendication 17 **caractérisé en ce que** le dispositif de soupape (91) est constitué comme une soupape motorisée (93) avec deux actionneurs de soupape réglables dans le sens opposé (95, 97).

17. Module de chauffage et de refroidissement selon la revendication 15 **caractérisé en ce que** le dispositif de soupape (91) comprend deux soupapes commandées par la température (101, 103).

18. Dispositif de chauffage et de refroidissement selon l'une quelconque des revendications 1 à 10 **caractérisé par** un module de chauffage et de refroidissement (68) selon l'une quelconque des revendications 11 à 17.

19. Dispositif de chauffage et de refroidissement selon la revendication 18 **caractérisé par** au moins un dispositif de soupape par lequel on peut raccorder
- la première entrée (70) du module de chauffage et de refroidissement à une sortie de fluide de refroidissement de l'échangeur thermique d'air extérieur (27) ou de l'échangeur thermique d'habitacle (19),
- la deuxième entrée (71) à une sortie de fluide de refroidissement de l'échangeur thermique d'habitacle (19) ou de l'échangeur thermique d'air extérieur (27),
- la première sortie (73) à l'entrée de fluide de refroidissement de l'échangeur thermique d'air extérieur (27) ou de l'échangeur thermique d'habitacle (19), et
- la deuxième sortie (75) à une entrée de fluide de refroidissement de l'échangeur thermique d'habitacle (19) ou de l'échangeur thermique d'air extérieur (27).
